(19) Europäisches Patentamt
European Patent Office
Office européen des brevets

(11) **EP 2 576 035 B1**

(12) **EUROPÄISCHE PATENTSCHRIFT**

(45) Veröffentlichungstag und Bekanntmachung des Hinweises auf die Patenterteilung:
**30.07.2014   Patentblatt 2014/31**

(21) Anmeldenummer: **11722413.9**

(22) Anmeldetag: **27.05.2011**

(51) Int Cl.:
*B01F 5/02* *(2006.01)*      *B01F 5/04* *(2006.01)*
*B01F 5/10* *(2006.01)*      *C12C 11/00* *(2006.01)*
*C12C 11/02* *(2006.01)*      *C12C 13/00* *(2006.01)*
*B01F 15/00* *(2006.01)*      *B01F 15/04* *(2006.01)*

(86) Internationale Anmeldenummer:
**PCT/EP2011/058718**

(87) Internationale Veröffentlichungsnummer:
**WO 2011/147958 (01.12.2011 Gazette 2011/48)**

(54) **VERFAHREN ZUR BESCHLEUNIGTEN GÄRUNG UND VORRICHTUNG ZUR VERMISCHUNG EINES TANKINHALTS**

METHOD FOR ACCELERATED FERMENTATION AND DEVICE FOR MIXING A TANK CONTENT

PROCÉDÉ PERMETTANT D'ACCÉLÉRER LA FERMENTATION, ET DISPOSITIF DE MÉLANGE DU CONTENU D'UNE CUVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2010   PCT/EP2010/005602**
**28.05.2010   DE 102010029469**

(43) Veröffentlichungstag der Anmeldung:
**10.04.2013   Patentblatt 2013/15**

(73) Patentinhaber: **Gea Brewery Systems Gmbh Huppmann Tuchenhagen**
**21514 Büchen (DE)**

(72) Erfinder:
• **MICHEL, Rudolf**
  **96049 Bamberg (DE)**
• **WÜNSCHE, Thomas**
  **21514 Büchen (DE)**
• **KONTNY, Daniel**
  **21465 Wentorf (DE)**

(74) Vertreter: **Hess, Peter K. G.**
**Bardehle Pagenberg Partnerschaft mbB**
**Patentanwälte, Rechtsanwälte**
**Prinzregentenplatz 7**
**81675 München (DE)**

(56) Entgegenhaltungen:
WO-A2-98/45401          DE-A1- 19 740 319
DE-A1- 19 807 558       DE-U1- 20 000 841
FR-A1- 2 187 398        JP-A- 53 016 963
US-A- 923 571           US-A- 3 166 020

**Beschreibung**

1. Technisches Gebiet

Die Erfindung betrifft ein Verfahren zur beschleunigten Gärung in einem Gärtank, insbesondere bei der Bierherstellung, sowie eine Vorrichtung zur Vermischung eines Tankinhalts, insbesondere in der Lebensmittel-, Getränke- und Pharmaindustrie.

2. Stand der Technik

Die Gärung und anschließende Reifung des Biers in der Brauerei erfolgen üblicherweise in Behältern aus CrNi-Stahl, insbesondere in sogenannten zylindrokonischen Gärtanks (ZKG). Zur Temperatursteuerung während des Prozesses sind diese Behälter mit kühlbaren Elementen in der Zarge und im Konus ausgestattet. Für die Reinigung sind im oberen Bereich des Tanks feststehende oder bewegliche Elemente (wie z.B. Sprühkugeln oder Zielstrahlreiniger) angebracht. Mit Hilfe dieser Elemente wird der Tank nach Prozessende gereinigt und ggf. auch desinfiziert.

Beim Befüllen des Tanks wird auf eine ausgewogene Dosierung von aktiven Hefezellen und eine angepasste Belüftung der Bierwürze (Gärsubstrat) geachtet. Im Tank durchläuft die Hefe zunächst eine aerobe Vermehrungsphase und geht dann in die anaerobe Gärung über. Durch den Gärungsprozess wird aus dem Zucker der Bierwürze neben dem Alkohol auch Kohlensäure gebildet. Zu etwa 10 % geht die Kohlensäure dabei im Substrat in Lösung, die restlichen 90 % werden als $CO_2$-Gas freigesetzt. Die aufsteigenden $CO_2$-Bläschen bewirken in dem zylindrokonischen Gärtank eine in der Zentralsäule nach oben und folgedessen im Wandbereich nach unten gerichtete Strömung. Diese Strömung unterstützt die sich an der Wand durch die Kühlung ausbildende, nach unten gerichtete, Konvektionsströmung. In einem frühen Stadium des Gärprozesses beginnt im Gärtank auch die Sedimentation der Hefezellen, d.h. die Hefezellen setzen sich insbesondere unter dem Einfluss der Schwerkraft in Richtung des Tankbodens ab.

Der Gesamtprozess der Gärung und Reifung wird bei der Bierherstellung üblicherweise in vier grundlegende Abschnitte unterteilt:

a) die Hauptgärung: hierbei wird der Hauptanteil des Extraktes vergoren (als Extrakt wird üblicherweise die Summe aller gelösten Substanzen in der Bierwürze bezeichnet; diese sind im Wesentlichen Kohlenhydrate, Stickstoffsubstanzen, Polyphenole, Bitterstoffe und Mineralstoffe);

b) die Warmreifung: hier werden u.a. die Leitsubstanzen, die sogenannten vicinalen Diketone (VDK), welche insbesondere Diacetyl und Pentadion umfassen, unter einen vorgegebenen Geschmacks-Schwellenwert von z.B. 10 ppm, abgebaut;

c) die Abkühlung von der Gär- (ca. 15 - 22 °C bei obergärigen Bieren bzw. 8 - 16 °C bei untergärigen Bieren) auf die Lagertemperatur (üblicherweise < 2 °C);

d) die Kaltlager- oder Kaltreifungsphase: hier findet die Sedimentation der Hefezellen und anderer unerwünschter Trübungspartikel statt sowie der Ausfall von sedimentierbaren Substanzen durch Unterschreitung von Löslichkeitsgrenzen (z.B. Eiweiß, Gerbstoffe, etc.).

Zur Prozessbeeinflussung bleiben dem Brauer in der Regel die Parameter Druck und Temperatur. Dadurch ergeben sich übliche Prozesszeiten von ungefähr 14 Tagen (4 Tage Hauptgärung + 4 Tage Warmlagerung + 2 Tage Kühlen + 4 Tage Kaltlagerung).

Um die vorhandene Tankausstattung effektiver nutzen zu können, besteht ein Bedürfnis die oben genannten Vorgänge zu beschleunigen, so dass letztlich die Belegungszeit eines Gärtanks verkürzt und dadurch die Produktionskapazität im Gär- und Lagerkellerbereich erhöht werden kann.

Zur Verkürzung des Gärungs- und Reifungsprozesses bei der Bierherstellung werden im Wesentlichen die nachstehend kurz diskutierten Ansätze verfolgt:

Veränderung der Gärparameter Druck und Temperatur (Temperatursteigerung bedeutet meist auch Drucksteigerung):

Aufgrund des sensiblen Stoffwechsels der Hefe führt diese Verfahrensweise zu Veränderungen im Geschmacksprofil und im Biercharakter. Deswegen sind der Parametervariation hier durch die Hefephysiologie enge Grenzen gesetzt und die erzielbaren Zeitersparnisse sind gering.

Anhebung der Stammwürzekonzentration im Gärsubstrat:

Durch die Vergärung von Würzen mit einer Konzentration in der Größenordnung von 14 - 17 Gewichtsprozenten (GG-%) können bereits erhebliche Tankvolumina eingespart werden. Allerdings sind diesem Verfahren Grenzen durch die Hefephysiologie gesetzt. Die derzeit industriell genutzten Hefestämme vergären All-Malz-Würze bis 18 GG-% und Würze mit Rohfruchtanteilen bis 20 GG-%.

Übergang von chargenweisen bzw. diskontinuierlichen Produktionsverfahren zu kontinuierlichen Verfahren:

Kontinuierliche Gärungs- und Reifungsverfahren sind grundsätzlich bekannt und werden in der Fach- und Patentliteratur umfangreich beschrieben. Allerdings kommt diesen Verfahren wegen des möglichen hygienischen Risikos und einiger ungelöster Probleme im Bereich des Biomassehandlings noch keine nennenswerte industrielle Bedeutung zu.

Mischung des Tankinhaltes:

Wird die sich natürlich ausbildende Strömung im Tank wie oben beschrieben unterstützt, bleiben mehr Hefezellen in Schwebe. Dadurch wird die Sedimentation reduziert und die stofflichen Umsetzungen im Tank laufen aufgrund der höheren Hefezellzahlen in Schwebe - und damit im optimalen Substratkontakt - mit höherer Geschwindigkeit ab.

In der US 3,814,003 wird beispielsweise ein Verfahren beschrieben, bei dem durch das Einblasen von Kohlensäuregas mittels Lanzen oder einem Düsenring die natürliche Konvektionsströmung innerhalb des Tanks unterstützt werden soll. Diese Methode erfordert allerdings einen zusätzlichen Verbrauch an Kohlendioxidgas.

Aus der EP 1 324 818 B1 ist weiterhin ein Verfahren bekannt, bei dem der im oberen Bereich des Tankdeckels installierte Zielstrahlreiniger für Mischzwecke eingesetzt wird. Dabei wird das Mischorgan an einer etwas tieferen Stelle im Tank positioniert und das Gärsubstrat über eine Pumpe im Kreislauf gepumpt. Bauartbedingt erzeugt jedoch der Zielstrahlreiniger einen sehr hohen Druckverlust. Der Energieeintrag in das System Gärtank ist erheblich, so dass die Pumpe mit einem entsprechend großen Motor ausgestattet werden muss. Zudem ist die durch den Zielstrahlreiniger verursachte Mischwirkung insofern problematisch, als die natürliche Konvektionsströmung durch die Strahleinwirkung gestört wird.

Des Weiteren ist es in der Getränkeindustrie bekannt zur Vermischung eines Tankinhalts Düsenvorrichtungen innerhalb eines Tanks zu platzieren und Mengen des Tankinhalts mittels einer Pumpe durch die Düse zu leiten. Dadurch wird eine Strömung im Tank erzeugt, welche für die Vermischung des Tankinhalts sorgt. Bei den bekannten Düsen ist allerdings die Vermischungswirkung gering und es werden starke Pumpen benötigt, um den gesamten Tankinhalt umzuwälzen.

Die DE 197 40 319 A1 beschreibt eine Anordnung zum Durchführen eines Verfahrens zur beschleunigten Hefevermehrung im Brauprozess, mit einem tankartigen Assimilator zur Aufnahme einer Würze-Hefe-Suspension, welcher über eine Zulauf-, eine Ablauf- und eine diese beiden Leitungen miteinander verbindende Umlaufleitung in Verbindung mit einer Umpumpeinrichtung und einer Einrichtung zur Sauerstoff-Zudosierung verfügt. In der Zulaufleitung ist dabei ein statischer Mischer vorgesehen, in den die Einrichtung zur Sauerstoff-Zudosierung einmündet. Des Weiteren ist im Auslaufbereich eines kegelförmigen Bodenteils des Assimilators eine Flüssigkeitsstrahl-Mischdüse angeordnet, deren Düse an die Zulaufleitung angeschlossen ist. Der Auslauf des kegelförmigen Bodenteils mündet in die Ablaufleitung ein. Aus der DE 198 07 558 A1 bzw. aus der WO 98/45401 ist eine ähnliche Anordnung zur beschleunigten Gärung in zylindrokonischen Gärtanks bei der Herstellung von Bier bekannt. Diese umfasst einen zylindrokonischen Gärtank zur Aufnahme des Gärsubstrates und eine am unteren Ende des konischen Bodenteils des Gärtanks angeschlossene Ab- und Zulaufleitung. Die Ab- und Zulaufleitung sind dabei über eine Kreislaufleitung, in der eine Umpumpeinrichtung angeordnet ist, miteinander verbunden. Zudem ist im Auslaufbereich des kegelförmigen Bodenteils des Gärtanks eine Flüssigkeitsstrahl-Mischdüse angeordnet ist, deren Düse an die Zulaufleitung angeschlossen ist. Der Auslauf des kegelförmigen Bodenteils mündet wiederum in die Ablaufleitung ein. Bei den vorstehend beschriebenen Anordnungen ist jeweils die Flüssigkeitsstrahl-Mischdüse sehr tief im Tankkonus angeordnet, so dass der Ansaugbereich der Pumpe und der Ansaugbereich der Düse sehr dicht beieinander liegen. Dies hat jedoch zur Folge, dass kein ausreichender Saugstrom an der Düse entsteht, da der Druck an den lateralen Öffnungen der Düse zu gering ist und somit nicht genug Fluid angesaugt werden kann. In diesem Zusammenhang wird beispielhaft auf die Figur 3 der DE 197 40 319 A1 verwiesen, welche eine nachteilig angeordnete Düse zeigt. Der Bereich, in dem aus dem Konvektionsstrom K der Saugstrom S und der Treibstrom T entstehen, ist hier derart eng, dass an dieser Stelle sehr hohe Strömungsgeschwindigkeiten entstehen, wodurch der dynamische Druck an dieser Stelle so klein wird, dass der "Saugdruck" der Düse praktisch keine Saugströmung mehr erzeugen kann. Mit anderen Worten: der Saugdruck der Düse ist kleiner als der dynamische Druck an den lateralen Öffnungen der Düse, wodurch sich keine Saugströmung ausbilden kann. Eine höhere Anordnung der Düse innerhalb des Tankkonus wurde bislang abgelehnt, da man befürchtete, dass hierdurch eine zu geringe Hefezellen-Konzentration durch die Düse angesaugt werde. Zudem wollte man unter anderem auch den Abstand zwischen einem statischen Mischer (zur Sauerstoffdosierung) und der Düse so gering wie möglich halten, um eine Blasenkoaleszenz auf dieser Strecke zu verhindern.

Es ist daher die Aufgabe der vorliegenden Erfindung ein Verfahren zur beschleunigten Gärung bei der Bierherstellung bereitzustellen mit dem sowohl der Energieeintrag in den Gärtank reduziert werden kann als auch die Temperaturhomogenität im Gärtank verbessert werden kann und mit dem darüber hinaus die natürliche Konvektionsströmung im Gärtank auf effektive Weise unterstützt werden kann. Darüber hinaus soll aus hygienischen Gründen auf die Verwendung bewegter Teile innerhalb der Gärtanks verzichtet werden. Es ist des Weiteren die Aufgabe der Erfindung, eine Vorrichtung zur Vermischung eines Tankinhalts bereitzustellen, welche auf einfache Weise eine verbesserte Vermischung des Tankinhalts gewährleistet, weniger verschmutzungsanfällig und weniger verschleißanfällig ist. Zudem ist es insbesondere die Aufgabe der Erfindung, eine wirksame hydraulische Entkopplung des Ansaugbereichs der Pumpe und des Ansaugbereichs der Düse bereitzustellen.

### 3. Zusammenfassung der Erfindung

Die oben genannten Aufgaben werden gelöst durch ein Verfahren zur beschleunigten Gärung in einem Gärtank, insbesondere bei der Bierherstellung, gemäß Patentanspruch 1 sowie durch eine Vorrichtung zur Vermischung eines Tankinhalts gemäß Patentanspruch 9.

Insbesondere werden die oben genannten Aufgaben gelöst durch ein Verfahren zur beschleunigten Gärung in einem Gärtank mit zumindest einem Tankkonus und einem Anschlussflansch, insbesondere bei der Bierherstellung, mit den Schritten: a) Ansaugen von Gärmedium ($M_1$) aus dem Tank über eine erste Zirkulationsleitung mittels einer Zirkulationspumpe; b) Einleiten des von der Zirkulationspumpe über eine zweite Zirkulationsleitung nunmehr gepumpten Treibmediums ($M_1$) in ein Mischelement welches in einer Höhe (L) von 350 mm - 1800 mm gemessen von der Unterkante des Anschlussflansches bis zur Unterkante des Mischelements im Tankkonus eingebaut ist; und c) Erzeugen eines nach oben gerichteten Strahls, welcher durch eine Auslassöffnung des Mischelements austritt, so dass durch die dergestalt verbesserte Konvektionsströmung im Tank die Hefezellen länger in Schwebe bleiben; sowie durch eine Vorrichtung zur Vermischung eines Inhalts eines Tanks mit zumindest einem Tankkonus und einem Anschlussflansch, aufweisend: a. ein im Tankkonus anordnenbares Mischelement; b. einen am Tankauslauf anordnenbaren Einlass; c. eine Zirkulationspumpe; d. eine erste Zirkulationsleitung, die den Einlass mit der Zirkulationspumpe verbindet; und e. eine zweite Zirkulationsleitung, die die Zirkulationspumpe mit dem Mischelement verbindet; wobei f. das Mischelement in einer Höhe (L) von 350 mm - 1800 mm gemessen von der Unterkante des Anschlussflansches bis zur Unterkante des Mischelements im Tankkonus eingebaut ist.

Durch die verbesserte Konvektionsströmung im Tank können die Hefezellen länger in Schwebe bleiben, aber auch bereits sedimentierte Hefezellen können zumindest teilweise wieder in Schwebe gebracht werden.

In einer bevorzugten Ausführungsform des erfindungsgemäßen Verfahrens ist das Mischelement in einer Höhe (L) von 375 mm - 1650 mm, bevorzugt von 400 mm - 1500 mm, gemessen von der Unterkante des Anschlussflansches bis zur Unterkante des Mischelements im Tankkonus eingebaut. Auf diese Weise kann die hydraulische Entkopplung des Ansaugbereichs der Pumpe und des Ansaugbereichs der Düse bzw. des Mischelements noch effizienter gestaltet werden.

In einer weiteren bevorzugten Ausführungsform des erfindungsgemäßen Verfahrens beträgt die Umwälzzeit 3 h - 12 h, bevorzugt 4 h - 10 h, pro Umwälzung. Unter dem Begriff Umwälzzeit wird vorliegend der Quotient aus Tankvolumen und Mischvolumenstrom verstanden:

$$Umwälzzeit = \frac{V_T}{\dot{V}_{M12}}$$

Der Mischvolumenstrom aus dem Mischelement heraus berechnet sich vorliegend wie folgt:

$$\dot{V}_{M12} \approx 3 \, bis \, 4 \times \dot{V}_{M1} \quad \text{mit} \quad V_{M1} = \text{Treibvolumenstrom}$$

Die Mischzeit von wässrigen Lösungen ist bei den vorliegenden Strahlpumpen im Übrigen definiert als:

$$Mischzeit \approx 0{,}3 \times \frac{V_T}{\dot{V}_{M12}}$$

Der Faktor 0,3 ergibt sich aufgrund der, auch im Stand der Technik aufgezeigten, Reibungskräfte, die durch Impulsaustausch mit Teilchen aus dem Mischvolumenstrom mit denen aus dem Tankvolumen entstehen.

Vorzugsweise beträgt der Treibvolumenstrom ($M_1$) 6 m$^3$/h - 50 m$^3$/h, weiter bevorzugt 8 m$^3$/h - 41 m$^3$/h. In der Praxis ergibt sich somit beispielsweise bei einem durchschnittlich großen Tank (2660 hl Nutzvolumen) für 8 h Umwälzzeit ein Treibvolumenstrom ($M_1$) von lediglich etwa 8 m$^3$/h. Selbst wenn man von einem sehr großen Tank (10000 hl Nutzvolumen) und einer etwas schnelleren Umpumpzeit von 6 h ausgeht, wird lediglich ein Treibvolumenstrom von etwa 41 m$^3$/h erreicht. Diese Werte sind deutlich niedriger als die aus dem Stand der Technik bekannten Werte. Auf diese Weise kann einerseits eine maßgebliche Energieeinsparung am Pumpenantrieb erzielt werden, wobei gleichzeitig die Hefezellen einer geringeren Scherbeanspruchung durch Umpumpen ausgesetzt sind. Andererseits können trotzdem sehr gute Umwälz- bzw. Mischzeiten erreicht werden. Ein weiterer Vorteil der vergleichsweise geringen Treibvolumenströme besteht darin, dass keine Vorrichtungen zum Niederschlagen von Schaum bzw. Schaummeldesonden, wie sie im Stand der Technik regelmäßig verwendet werden, mehr notwendig sind, da aufgrund der geringen Treibvolumenströme keine Gefahr einer erhöhten Schaumbildung mehr besteht. Weiterhin wird durch die erhöhte Homogenität des Tankinhalts eine Bildung von "CO$_2$-Nestern" (erhöhte CO$_2$-Konzentration an bestimmten Orten im Tank) im Produkt vermieden. Aus diesen "CO$_2$-Nestern" entsteht oftmals das nachteilige Überschäumen des Tankinhalts. Als weiterer Vorteil wäre zu nennen, dass im klassischen zylindrokonischen Gärtank regelmäßig ein Steigraum von ca. 20-25 % des Bruttovolumens während der Gärung eingehalten werden muss, damit etwaige Schaumbildung nicht zu einem Überlaufen des Tanks führt. Mit den vorstehend genannten Maßnahmen kann dieser Steigraum ggf. reduziert werden und damit das Nutzvolumen des Tanks erhöht werden. Dies ist ein zusätzlicher Nutzgewinn für die Brauerei, da sich damit sowohl die Gärtankkapazität als auch der Ausstoß ohne zusätzliche Tanks - und den damit verbundenen hohen Investitionen - erhöhen lassen.

In einer anderen bevorzugten Ausführungsform des erfindungsgemäßen Verfahrens wird als Mischelement ein vollverschweißtes Modul verwendet, welches aus zwei zerspanten (Dreh-) Teilen zusammengesetzt wird, wobei durch die verschweißte Bauart eine hygienische Ausführung der Düse entsteht. Ein solches Mischelement entspricht besonders gut den hygienischen Anforderungen in der Brauerei. Es wird nämlich keine Verschraubung mehr benötigt, um die Düse in das Mischelement einzuschrauben. Auch die Verbindung des Mischelements mit der (zweiten) Zirkulationsleitung ist vorzugsweise eine Schweißverbindung. Beim Reinigen des Mischelements kann dieses so auf allen Oberflächen mit Reinigungslösung beaufschlagt werden, wodurch eine besonders hygienische Reinigung ermöglicht wird. Die bislang bekannten Mischelemente sind dagegen mit Verschraubungen ausgeführt. Als Alternative wäre eine Schraubkonstruktion mit entsprechenden Dichtungen denkbar, wobei die Dichtungen dafür sorgen, dass das Gewinde hermetisch abgeschlossen ist. Allerdings ist dies nur bedingt akzeptabel, da einerseits die Dichtungen einer Alterung unterliegen und andererseits die Konstruktion sehr aufwendig ist.

In einer noch anderen bevorzugten Ausführungsform des erfindungsgemäßen Verfahrens wird in Schritt b) das von der Zirkulationspumpe über eine zweite Zirkulationsleitung nunmehr gepumpte Treibmedium ($M_1$) mittels eines Treibkopfs in das Mischelement eingespritzt, wobei das Treibmedium ($M_1$) mit weiterem Gärmedium ($M_2$), welches vermittels des durch das Einspritzen des Treibmediums ($M_1$) erzeugten Unterdrucks über eine oder mehrere Einlassöffnungen des Mischelements direkt in das Mischelement eingesaugt wird, zu einem das Mischelement nach oben durchströmenden Mischstrahl ($M_{12}$) vermischt wird; und wobei in Schritt c) der nach oben gerichtete Mischstrahl ($M_{12}$) durch eine Auslassöffnung des Mischelements austritt, so dass durch die dergestalt verbesserte Konvektionsströmung im Tank die Hefezellen länger in Schwebe bleiben. Hierdurch wird eine schonendere Hefebehandlung gewährleistet und es können Pumpen mit geringerer Leistung verwendet werden.

In einer weiteren bevorzugten Ausführungsform des erfindungsgemäßen Verfahrens ist das Mischelement dergestalt im Tank ausgerichtet, dass der Strahl bzw. der Mischstrahl ($M_{12}$) in Schritt c) im Wesentlichen vertikal austritt. Dadurch, dass der Mischstrahl zentral nach oben gerichtet wird, und damit die gleiche Richtung aufweist wie die natürliche Blasensäule durch die CO$_2$-Entwicklung, wird auf effiziente Weise eine zusätzliche Unterstützung der natürlichen Konvektionsströmung im Tank erreicht.

In einer bevorzugten Ausführungsform der erfindungsgemäßen Vorrichtung ist das Mischelement in einer Höhe (L) von 375 mm - 1650 mm, bevorzugt von 400 mm - 1500 mm, zwischen der Unterkante des Anschlussflanschs und der Unterkante des Mischelements im Tankkonus eingebaut. Auf diese Weise kann wiederum die hydraulische Entkopplung des Ansaugbereichs der Pumpe und des Ansaugbereichs der Düse bzw. des Mischelements noch effizienter gestaltet werden.

In einer weiteren bevorzugten Ausführungsform der erfindungsgemäßen Vorrichtung weist das Mischelement auf: einen Treibkopf, der mit der zweiten Zirkulationsleitung verbunden ist; eine Mischkammer, die den Treibkopf umgibt, mit mindestens einer Einlassöffnung, um Medium aus dem Tank anzusaugen und mit dem durch den Treibkopf strömenden Treibmedium zu vermischen; und einen Diffusor stromabwärts der Mischkammer, der eine Auslassöffnung zum Abgeben der vermischten Medien ($M_1 + M_2$) in den Tank aufweist. Das durch die Treibdüse strömende, aus dem Tankinhalt entnommene Treibmedium ($M_1$) erzeugt im Diffusor eine schnellfließende Strömung, welche in der Mischkammer einen Unterdruck erzeugt. Durch diesen Unterdruck wird durch mindestens eine Ansaugöffnung Flüssigkeit ($M_2$) aus dem Tank in die Mischkammer hineingezogen, in der Mischkammer und in dem nachfolgenden Diffusor mit dem Treibmedium vermischt und durch eine Auslassöffnung am Ende des Diffusors wieder in den Tank abgegeben. Im Gegensatz zu einer gewöhnlichen im Tank angeordneten Düse erfolgt hier eine Ansaugung von Medium (Flüssigkeit) aus dem Tank in die Strahlpumpe hinein, wobei in der Mischkammer dann eine Zwangsvermischung dieses angesaugten Mediums mit dem Treibmedium erfolgt. Die Vermischung ist daher wesentlich intensiver als dies bei einer bloßen Erzeugung einer Strömung im Tank gegeben wäre.

In einer noch weiteren bevorzugten Ausführungsform der erfindungsgemäßen Vorrichtung sind eines oder mehrere Ventile an die erste Zirkulationsleitung angeschlossen. Durch diese Ventile ist es möglich, einen hydraulischen Anschluss des Tanks an Rohrleitungen vorzunehmen. Über diese Ventile kann der Tank befüllt, entleert oder gereinigt werden. Weiterhin ist es möglich, unterschiedliche Flüssigkeiten zuzuführen, welche dann von der Vorrichtung im Tank miteinander vermischt werden.

In einer anderen bevorzugten Ausführungsform der erfindungsgemäßen Vorrichtung ist das Mischelement ein vollverschweißtes Modul, welches aus zwei zerspanten (Dreh-) Teilen zusammengesetzt wird, wobei durch die verschweißte Bauart eine hygienische Ausführung der Düse entsteht. Ein solches Mischelement entspricht besonders gut den hygienischen Anforderungen in der Brauerei. Es wird nämlich keine Verschraubung mehr benötigt, um die Düse in das Mischelement einzuschrauben. Auch die Verbindung des Mischelements mit der (zweiten) Zirkulationsleitung ist vorzugsweise eine Schweißverbindung. Beim Reinigen des Mischelements kann dieses auf allen Oberflächen mit Reinigungslösung beaufschlagt werden, wodurch eine besonders hygienische Reinigung ermöglicht wird. Die bislang bekannten Mischelemente sind dagegen mit Verschraubungen ausgeführt. Als Alternative wäre eine Schraubkonstruktion mit entsprechenden Dichtungen denkbar, wobei die Dichtungen dafür sorgen, dass das Gewinde hermetisch abgeschlossen ist. Allerdings ist dies nur bedingt akzeptabel, da einerseits die Dichtungen einer Alterung unterliegen und andererseits die Konstruktion sehr aufwendig ist.

In einer weiteren bevorzugten Ausführungsform der erfindungsgemäßen Vorrichtung ist der Einlass als Hohlkörper ausgebildet, durch den sich die zweite Zirkulationsleitung hindurch und in den Tank hinein erstreckt. Dementsprechend gibt es nur einen Anschluss der Vorrichtung an den Tank, nämlich am untersten Ende des Tanks. Das Medium wird durch den Hohlkörper am untersten Ende des Tanks abgesaugt und mittels der Pumpe durch die zweite Zirkulationsleitung und durch den Hohlkörper hindurch in den Tank hinein gefördert. Dort erreicht es das erfindungsgemäße Mischelement bzw. die Strahlpumpe, welche(s) die Vermischung des gepumpten Mediums mit einem Medium aus dem Tank bewirkt.

## 4. Kurze Beschreibung der Figuren

Im Folgenden werden anhand der beigefügten Figuren beispielhaft Ausführungsformen einer erfindungsgemäßen Vorrichtung zur Durchführung des erfindungsgemäßen Verfahrens beschrieben. In denen zeigt:

Fig. 1 eine schematische Seitenansicht einer ersten Ausführungsform einer erfindungsgemäßen Vorrichtung zur Durchführung des erfindungsgemäßen Verfahrens mit einer geschnitten Ansicht eines ersten Mischelements;

Fig. 2 eine schematische Seitenansicht einer zweiten Ausführungsform einer erfindungsgemäßen Vorrichtung zur Durchführung des erfindungsgemäßen Verfahrens mit einem zweiten Mischelement; und

Fig. 3 die Vorrichtung nach Fig. 2 in einer Vorderansicht;

Fig. 4 eine Einzelansicht eines Mischelements gemäß den Fig. 2 und 3 mit angedeuteten Teilvolumenströmen.

## 5. Detaillierte Beschreibung bevorzugter Ausführungsformen

Im Folgenden werden bevorzugte Ausführungsformen einer erfindungsgemäßen Vorrichtung zur Durchführung des erfindungsgemäßen Verfahrens im Detail beschrieben. Einzelmerkmale einer Ausführungsform können mit Merkmalen anderer Ausführungsformen kombiniert werden. In allen Ausführungsformen wurden für entsprechende Merkmale die gleichen Bezugszeichen verwendet.

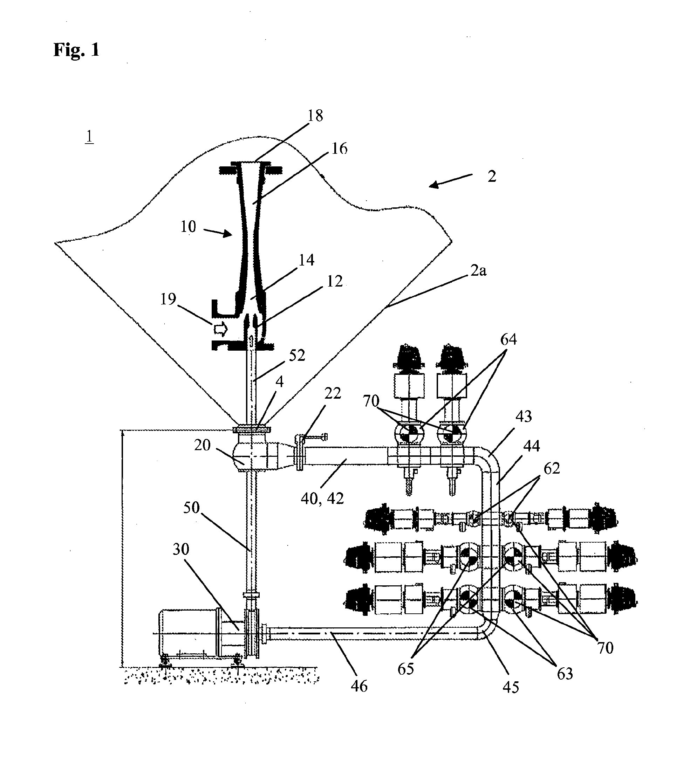

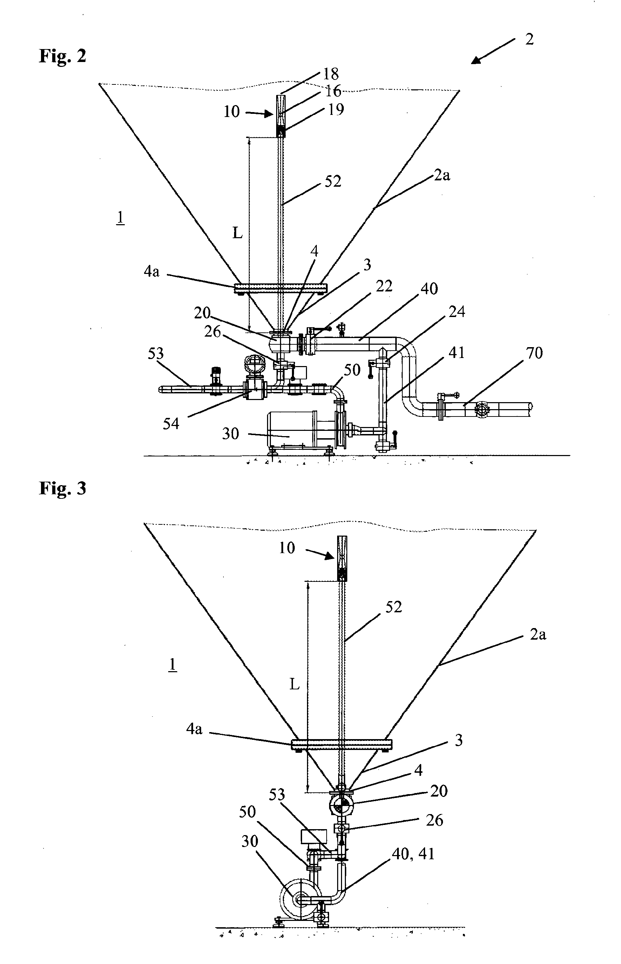

Die Figuren 1 - 3 zeigen schematische Seiten- bzw. Vorderansichten einer erfindungsgemäßen Vorrichtung 1 zur Durchführung des erfindungsgemäßen Verfahrens, wobei Fig. 1 eine erste Ausführungsform und die Figuren 2 und 3 eine zweite Ausführungsform zeigen. In den Figuren ist schematisch der untere Tankkonus eines Tanks 2 dargestellt. Der Tank 2 ist beispielsweise ein zylindrokonischer Tank (ZKT) einer Brauereianlage, insbesondere ein Gärtank (ZKG).

Wie dargestellt, ist am unteren Ende des Tankkonus 2a (Fig. 1) bzw. des Konusmannlochs 3 (Fig. 2 und 3) ein hohlkörperförmiger Einlass 20 an einen Anschlussflansch 4 angeschlossen, so dass durch den Einlass 20 Flüssigkeit, oder eine anderes Medium, aus dem Tank 2 in die Vorrichtung 1 eintreten kann. An den Einlass 20 ist ein Klappenventil 22 angeschlossen, mit dem ein Flüssigkeitseintritt in die Vorrichtung 1 etwa zu Wartungszwecken abgesperrt werden kann.

Vom Einlass 20 gelangt die Flüssigkeit in eine erste Zirkulationsleitung 40, die den Einlass 20 mit einer Zirkulationspumpe 30 verbindet. Die Zirkulationspumpe 30 ist bevorzugt eine elektrisch angetriebene Pumpe, welche die vom Einlass 20 kommende Flüssigkeit über eine zweite Zirkulationsleitung 50 in den Tank 2 hineinpumpt.

Die zweite Zirkulationsleitung 50 erstreckt sich durch den Hohlkörper des Einlasses 20 hindurch, ist jedoch hydraulisch nicht mit diesem verbunden. Durch diese Anordnung ergibt sich eine strömungsgünstig optimale und auch mechanisch optimale Anschlussmöglichkeit der Vorrichtung 1 an einen Tank 2. Insbesondere wird für den Anschluss der Vorrichtung 1 an den Tank 2 nur eine Öffnung verwendet, nämlich der stets vorhandene untere Anschlussflansch 4 eines zylindrokonischen Tanks. Dementsprechend kann jeder übliche zylindrokonische Tank mit einer Vorrichtung 1 zur Vermischung des Tankinhalts ausgerüstet, bzw. nachgerüstet werden.

Die zweite Zirkulationsleitung 50 erstreckt sich über eine gewisse Länge L (vgl. Figuren 2 und 3) in den unteren Bereich des Tanks 2 hinein, wobei der sich in den Tank hinein erstreckende Bereich 52 der zweiten Zirkulationsleitung 50 eine Länge L von 350 mm - 1800 mm, bevorzugt 375 mm - 1650 mm und noch bevorzugter von 400 mm - 1500 mm aufweisen kann. In einer bevorzugten Ausführungsform wird eine Länge L von 1000 mm oder von 1200 mm verwendet.

Am oberen Ende des Bereichs 52 ist ein Mischelement in Form einer Jet- bzw. Strahlpumpe 10 an die zweite Zirkulationsleitung 50 angeschlossen. Durch die Dimensionierung des Bereichs 52 der zweiten Zirkulationsleitung 50 (Höhe L, gemessen von der Unterkante des (unteren) Anschlussflanschs 4 bis zur Unterkante des Mischelements 10) kann das Mischelement 10 in einer vorteilhaften Höhe innerhalb eines Tanks 2 angeordnet werden.

Das Mischelement 10 weist einen Treibkopf 12 auf, der mit der zweiten Zirkulationsleitimg 50 verbunden ist. Der Treibkopf 12 spritzt das von der Zirkulationspumpe 30 gepumpte Medium (das sogenannte "Treibmedium") in eine Mischkammer 14 hinein, die den Treibkopf 12 umgibt. Die Mischkammer 14 weist in ihrem unteren Bereich eine Einlass- bzw. Ansaugöffnung 19 auf, durch die Medium, insbesondere Flüssigkeit, aus dem Tank ebenfalls in die Mischkammer 14 einströmen kann. Durch das Ausströmen des Treibmediums durch den Treibkopf 12 wird innerhalb der Mischkammer 14 ein Unterdruck erzeugt, der Medium direkt aus dem Tank durch die Ansaugöffnung 19 in die Mischkammer einströmen lässt.

In der Mischkammer 14 wird dann das Treibmedium, das aus dem Treibkopf 12 ausströmt, mit dem direkt aus dem Tank 2 durch die Ansaugöffnung 19 einströmenden Medium vermischt. Stromabwärtig der Mischkammer 14 ist ein Diffusor 16 angeordnet. Durch den sich verengenden Querschnitt des Diffusors 16 wird die Ansaugwirkung der Strahlpumpe 10 für Medium aus dem Tank noch verstärkt. Der Diffusor 16 mündet in eine Auslassöffnung 18, aus der die vermischten Medien in den Tank 2 ausströmen.

Das Mischelement 10 dient zum einen dazu, durch den Einlass 20 angesaugtes Medium wieder in den Tank 2 einzubringen und damit eine Strömung innerhalb des Tanks 2 zu erzeugen bzw. zu unterstützen. Zum anderen wird durch das Einströmen des gepumpten Mediums (Treibmedium) in das Mischelement 10 ein Unterdruck innerhalb des Mischelements 10 erzeugt, der weiteres Medium direkt aus dem Tank 2 ansaugt. Dieses vermischt sich mit dem Treibmedium und wird durch die Auslassöffnung 18 in den Tank 2 eingebracht. Die Vermischung des Tankinhalts erfolgt daher sowohl außerhalb der Strahlpumpe 10 im Tank 2 als auch innerhalb der Strahlpumpe 10 selbst.

Die Vorrichtung der zweiten Ausführungsform gemäß Figuren 2 und 3 unterscheidet sich von der ersten Ausführungsform gemäß Figur 1 in der räumlichen Ausgestaltung der Strahlpumpe 10, der ersten Zirkulationsleitung 40 und der zweiten Zirkulationsleitung 50.

Die Strahlpumpe 10 der zweiten Ausführungsform ist kleiner und schlanker ausgebildet als die in Fig. 1 schematisch dargestellte, umfasst aber die gleichen Komponenten und hat die gleiche Funktion. Durch die kleinere, schlankere Form kann die Strahlpumpe 10 problemlos durch den Anschlussflansch 4 im unteren Konusmannlochbereich eingebracht und in der Höhe L montiert werden. Auch diese Strahlpumpe 10 weist einen Treibkopf 12, eine Mischkammer 14, mindestens eine Ansaugöffnung 19, einen Diffusor 16 und eine Auslassöffnung 18 zum Abgeben der vermischten Medien in den Tank 2 auf. Das Mischelement bzw. die Strahlpumpe 10 ist jeweils oberhalb des Konusmannlochs 3 angeordnet, welches regelmäßig eine Höhe von ca. 350 mm - 450 mm, vorzugsweise ca. 400 mm, aufweist sowie einen oberen Flansch 4a (z.B. DN450) und einen unteren Flansch bzw. Anschlussflansch 4 (z.B. Dz100-125).

In der Ausführungsform der Fig. 1 ist die erste Zirkulationsleitung 40 bevorzugt U-förmig ausbildet und umfasst einen ersten geraden Schenkel 42 welcher von dem Einlass 20 ausgehend im Wesentlichen horizontal angeordnet ist. Der erste Schenkel 42 ist über einen 90° Bogen 43, mit einem zweiten geraden Schenkel 44 verbunden, welcher im Wesentlichen vertikal angeordnet ist. Dieser zweite gerade Schenkel 44 geht über einen 90° Bogen 45 in einen dritten gerade Schenkel 46 über, welcher wiederum im Wesentlichen horizontal angeordnet ist und zu einer Ansaugöffnung einer Zirkulationspumpe 30 führt. Die zweite Zirkuladonsleitung 50 verläuft im Wesentlichen gerade und vertikal nach oben und ist unmittelbar an eine Auslassöffnung der Zirkulationspumpe 30 angeschlossen.

Sowohl am vertikal angeordneten Schenkel 44 als auch an dem horizontal angeordneten Schenkel 42 der ersten Zirkulationsleitung 50 sind vermischungssichere Ventile, bevorzugt Doppelsitzventile 62, 63, 64, 65 angeordnet. Wie dargestellt, bestehen die Ventile 62, 63, 65 aus jeweils zwei Paaren von gegenüberliegenden Ventilen. Damit ergibt sich eine besonders platzsparende Anordnung der Ventile an dem vertikalen Schenkel 44 der ersten Zirkulationsleitung 50. Wie dargestellt sind die Ventilgehäuse unmittelbar an die Wandung der ersten Zirkulationsleitung 50 angeschlossen. Es ist auch möglich, dass die Ventilgehäuse der dargestellten Doppelsitzventile 62, 63, 64, 65 ein Teil der zweiten Zirkulationsleitung 40 bilden. Dies ist mikrobiologisch vorteilhaft, weil dann keine Taschen oder sonstige Hohlräume zwischen der ersten Zirkulationsleitung und den Ventilen existieren, in denen sich Flüssigkeiten ansammeln und ablagern können. Dementsprechend ist die Flüssigkeit innerhalb der Vorrichtung 1 stets in Bewegung und in Stoffaustausch mit dem Inhalt des Tanks 2.

Über die Ventile 62, 63, 64, 65 werden bevorzugt horizontal verlegte Rohrleitungen 70 an die Vorrichtung 1 und damit an den Tank 2 angeschlossen. Über diese Rohrleitungen 70 kann der Tank 2 mit diversen Medien befüllt und entleert werden. Weiterhin ist es möglich, während der Reinigung des Tankinnenraumes einen Teilstrom der Reinigungsflüssigkeit über die Zirkulationspumpe zur Vorrichtung 1 zu leiten und so eine effektive Reinigung der gesamten Vorrichtung 1 zu gewährleisten.

Werden mehrere Tanks 2 mit Vorrichtungen 1 in einer Reihe hintereinander angeordnet, so können die an die Ventile 62, 63, 64, 65 angeschlossenen Rohrleitungen 70 die Tanks so miteinander verbinden, dass jeder Tank 2 mit entsprechenden Rohrleitungen 70 verbunden werden kann. Hiermit lässt sich ein vorteilhaftes festverrohrtes Tanklagersystem aufbauen, das ohne weitere Ventilmatrixen, Verteilerpaneele oder Rohrbogenpaneele zur Verschaltung der Tanks auskommt.

In der zweiten Ausführungsform gemäß den Figuren 2 und 3 besteht die erste Zirkuladonsleitung 40 aus einem geraden Stück einer stärker dimensionierten Rohrleitung 70, die auch als Zuleitung zum Tank 2 dient. Zwischen der ersten Zirkulationsleitung 40 und dem Einlass 20 ist ein Klappenventil 22 angeordnet. An die Rohrleitung 70 ist weiterhin ein zweites Klappenventil 24 angeschlossen, an das sich die Fortsetzung 41 der ersten Zirkulationsleitung 40 anschließt, die sich bis zur Zirkulationspumpe 30 erstreckt. Da für die Vermischung der Medien in dem Tank 2 ein geringerer Volumenstrom benötigt wird als zur Befüllung oder Entleerung des Tanks 2, ist die Fortsetzung 41 der Zirkulationsleitung 40 kleiner dimensioniert als die Rohrleitung 70.

Von der Zirkulationspumpe 30 wird das zirkulierende Medium über einer zweite Zirkulationsleitung 50 zur Strahlpumpe 10 gefördert. Die zweite Zirkulationsleitung 50 erstreckt sich zunächst von der Pumpe 30 senkrecht nach oben und geht dann in einen horizontal angeordneten im Wesentlichen U-förmigen Bogen 53 über, an den Ventile oder Messeinrichtungen 54 angeschlossen werden können. Beispielsweise kann eine Messeinrichtung 54 zur Messung des Hefegehalts im zirkulierten Medium an die Zirkulationsleitung 50 angeschlossen werden. Am Ende des U-förmigen Bogens 53 geht die zweite Zirkulationsleitung 50 in einen Bereich über, der senkrecht nach oben, durch den Einlass 20 hindurch, in den Tank 2 hinein verläuft. Unterhalb des Einlasses 20 kann die zweite Zirkulationsleitung 20 bei Bedarf durch ein weiteres Klappenventil 26 vom Bereich 52 innerhalb des Tanks 2 abgetrennt werden.

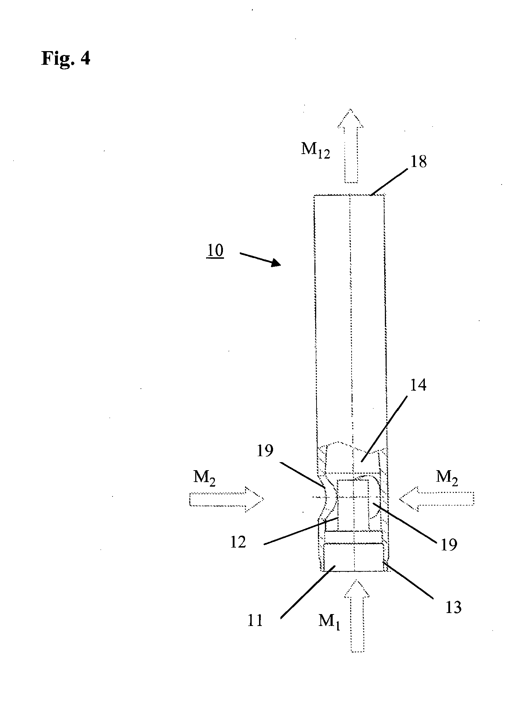

In Fig. 4 wird schließlich das Mischelement 10 im Detail veranschaulicht. Wie in den Ausführungsformen gemäß Fig. 2 und 3 ist auch hier das Mischelement 10 vorzugsweise in Form einer Jet- bzw. Strahlpumpe ausgebildet. Das Mischelement 10 kann jedoch auch als Venturi-Düse ausgebildet sein. Das Mischelement 10 weist grundsätzlich eine zylindrische Form auf mit einer Eintrittsöffnung 11 an seinem in Strömungsrichtung unteren Ende, einer Auslassöffnung 18 an seinem in Strömungsrichtung oberen Ende sowie mit einer oder mehreren seitlich angeordneten Einlassöffnung(en) 19.

Die Eintrittsöffnung 11 des Mischelements 10 kann, wie gezeigt, mit einem Innengewinde 13 versehen sein, mittels dem das Mischelement 10 mit einem korrespondierenden Ende der zweiten Zirkulationsleitung 50 verschraubt wird, so dass das Mischelement 10 feststehend im Tankkonus 2a eingebaut werden kann. Das Innengewinde 13 ist weniger anfällig für Kontaminationen als ein Außengewinde. Es können auch Dichtungen (nicht gezeigt) vorgesehen sein, die das Gewinde hermetisch abriegeln. Besonders bevorzugt wird allerdings das Mischelement als vollverschweißtes Modul ausgebildet sein, welches aus zwei zerspanten (Dreh-) Teilen zusammengesetzt wird. Auch die Verbindung mit der zweiten Zirkulationsleitung 50 wird besonders bevorzugt eine Schweißverbindung sein. Stromabwärts von der Eintrittsöffnung 11 des Mischelements 10 ist der Treibkopf 12 angeordnet. Der Treibkopf 12 ist regelmäßig als Düse ausgebildet oder aber als Rohrstück mit kleinerem Durchmesser als die Eintrittsöffnung 11 des Mischelements 10. Der Treibkopf 12 wird umschlossen von der Mischkammer 14. Die seitlichen Einlassöffnung(en) 19 sind in etwa in der Höhe des Treibkopfs 12 in der Mischkammer 14 angeordnet. Stromaufwärts von der Mischkammer 14 schließt sich regelmäßig ein Bereich mit einer Querschnittsverengung bzw. ein Diffusor an, an dessen Ende sich die Auslassöffnung 18 des Mischelements 10 befindet.

Im Folgenden soll der Ablauf des erfindungsgemäßen Verfahrens zur beschleunigten Gärung in einem Gärtank 2, insbesondere bei der Bierherstellung, kurz erläutert werden:

Zunächst wird mittels der Zirkulationspumpe 30 Gärmedium $M_1$ über die erste Zirkulationsleitung 40 aus dem Tank 2 angesaugt. Dies kann, wie in den Fig. 1 - 3 dargestellt, über einen Einlass 20 am tiefsten Punkt des Tankkonus 2a bzw. des Konusmannlochs 3 erfolgen oder aber über einen Anstich an einem beliebigen Punkt der Tankwandung (Konus und Zarge). Anschließend wird das von der Zirkulationspumpe 30 über die zweite Zirkulationsleitung 50 nunmehr gepumpte Treibmedium $M_1$ mittels des Treibkopfs 12 in das Mischelement 10 eingespritzt, welches feststehend im Tankkonus 2a eingebaut ist. Da das Treibmedium mit einer relativ hohen Geschwindigkeit (diese kann z.B. über die Form der Düse bzw. den Durchmesser des Treibkopfs 12 eingestellt werden) aus dem Treibkopf 12 austritt, entsteht im Bereich der Mischkammer 14 ein dynamischer Druckabfall. Das Treibmedium $M_1$ wird nunmehr mit weiterem Gärmedium $M_2$ (Saugmedium) vermischt, welches vermittels des durch das Einspritzen des Treibmediums $M_1$ erzeugten Unterdrucks über die eine oder mehreren Einlassöffnungen 19 des Mischelements 10 direkt in das Mischelement 10 eingesaugt wird, und zwar zu einem das Mischelement 10 nach oben durchströmenden Mischstrahl $M_{12}$. Anschließend tritt der Mischstrahl $M_{12}$ durch eine Auslassöffnung 18 des Mischelements 10 wieder in den Tank 2 aus.

Im Regelfall ist das Mischelement 10 dergestalt im Tank 2 ausgerichtet, das der Mischstrahl $M_{12}$ im Wesentlichen vertikal bzw. zentral nach oben (d.h. in gleicher Richtung wie die natürliche Blasensäule durch die $CO_2$-Entwicklung) austritt, um die Konvektionsströmung im Tank 2 optimal zu unterstützen. Der Mischstrahl $M_{12}$ wird vor dem Austreten vorzugsweise durch eine Querschnittsverengung des Mischelements 10 weiter beschleunigt. Diese Querschnittsverengung ist regelmäßig in Form eines Diffusors 16 stromaufwärts von der Mischkammer 14 angeordnet und sorgt für eine noch weitergehende Unterstützung der Konvektionsströmung im Tank 2.

Bevorzugt ist das Mischelement 10 des Weiteren so ausgelegt, dass der durch die Einlassöffnungen 19 des Mischelements 10 eingesaugte Volumenstrom $M_2$ (Saugmedium) jedenfalls größer ist als der durch die Zirkulationspumpe 30 geförderte Volumenstrom $M_1$ (Treibmedium). Dies gewährleistet eine schonende Behandlung der Hefe und es kann eine energetisch günstige Zirkulationspumpe 30 für einen entsprechend geringeren Volumenstrom eingesetzt werden.

Eine weiteren Ausgestaltung umfasst ein Verfahren zur beschleunigten Gärung in einem Gärtank, insbesondere bei der Bierherstellung, mit den Schritten a) Ansaugen von Gärmedium ($M_1$) aus dem Tank über eine erste Zirkuladonsleitung mittels einer Zirkulationspumpe; b) Einleiten des von der Zirkulationspumpe über eine zweite Zirkulationsleitung nunmehr gepumpten Treibmediums ($M_1$) in ein Mischelement welches feststehend im Tankkonus eingebaut ist; und c) Erzeugen eins nach oben gerichteten Strahls welcher durch eine Auslassöffnung des Mischelements austritt, so dass durch die dergestalt verbesserte Konvektionsströmung im Tank die Hefezellen länger in Schwebe bleiben; sowie eine Vorrichtung zur Vermischung eines Tankinhalts, aufweisend einen in einem Tank anordenbaren Auslass, einen in einem Tankauslaufbereich anordenbaren Einlass, eine Zirkulationspumpe, eine erste Zirkulationsleitung, die den Einlass mit der Zirkulationspumpe verbindet und eine zweite Zirkulationsleitung die die Zirkulationspumpe mit dem Auslass verbindet, wobei der Auslass als Strahlpumpe ausgebildet ist.

Durch das Verfahren werden Hefezellen, die sich bereits im Konusbereich des Tanks befinden angesaugt und wieder in die obere Tankregion befördert, so dass die Schwebezeit der Hefezellen und damit auch die Kontaktzeit der Hefezellen zum Gärsubstrat verlängert wird. Die für die Gärung zur Verfügung stehende Kontaktfläche wird durch die vermehrte Anzahl der in Schwebe befindlichen Hefezellen erheblich vergrößert. Auf diese Weise werden die Stoffwechselvorgänge der Hefe positiv unterstützt und die Prozesszeit entsprechend verkürzt. Der Zeitaufwand zur Abkühlung des Tankinhaltes von der Temperatur der Warmreifung auf die Kaltreifung wird ebenfalls verkürzt; Zonen mit stark abweichenden Temperaturen werden durch die von dem Mischelement erzeugte Zwangsströmung sicher vermieden.

Auch der Sedimentationsprozess im Gärtank kann insofern optimiert werden, als dass durch die Umwälzung im Tank kleinere Partikeln miteinander agglomerieren und so besser sedimentieren. Dadurch können in einer nachgeschalteten Filtration vergleichsweise geringere Mengen an Filterhilfsmitteln eingesetzt werden. Auch die Dosierung von Stabilisierungsmitteln wie Kieselgel, Xerogel oder Bentonit kann geringer gehalten werden, was ebenfalls zu einer Entlastung der nachgeschalteten Filteranlage führt. Auf den Einsatz eines Zielstrahlreinigers mit bewegten Teilen kann so gegebenenfalls verzichtet werden.

Bei der Vorrichtung wird durch den Einlass direkt aus dem Tankauslaufbereich eines Tanks Flüssigkeit aus dem Tank abgezogen, über eine erste Zirkulationsleitung zu einer Zirkulationspumpe geleitet, welche dann über eine zweite Zirkulationsleitung die Flüssigkeit wieder in den Tank hinein pumpt, wo sie von einem Auslass wieder in den Tank abgegeben wird. Der Auslass befindet sich im Inneren des Tankes und ist erfindungsgemäß als Strahlpumpe ausgebildet. Der Auslass weist daher keine beweglichen Teile auf und sorgt dennoch für eine gute und sichere Vermischung des Tankinhalts.

Diese gute Vermischung ist insbesondere durch die Verwendung einer Strahlpumpe als Auslass gegeben. Die Strahlpumpe zieht Medium aus dem Tank an und sorgt innerhalb der Strahlpumpe für eine Vermischung des angesaugten Tankinhalts und der durch die Strahlpumpe gepumpten Flüssigkeit. Gleichzeitig wird durch die Strahlpumpe eine Strömung im gesamten Tank erzeugt, welche für eine zusätzliche Vermischung des Tankinhalts sorgt. Die Strahlpumpe hat daher den kombinatorischen Effekt einerseits für eine Strömung im Tank insgesamt zu sorgen und andererseits in ihr selbst eine Vermischung von mindestens zwei Flüssigkeitsströmen des Tankinhalts durchzuführen.

Mittels einer solchen Vorrichtung und der besonders guten Vermischung des Tankinhalts werden kleinere Pumpendrücke benötigt, so dass der Tankinhalt schonend behandelt wird.

In einer bevorzugten Variante des Verfahrens wird in Schritt b) das von der Zirkulationspumpe über eine zweite Zirkulationsleitung nunmehr gepumpte Treibmedium ($M_1$) mittels eines Treibkopfs in ein Mischelement eingespritzt welches feststehend im Tankkonus eingebaut ist, wobei das Treibmedium ($M_1$) mit weiterem Gärmedium ($M_2$), welches vermittels des durch das Einspritzen des Treibmediums ($M_1$) erzeugten Unterdrucks über eine oder mehrere Einlassöffnungen des Mischelements direkt in das Mischelement eingesaugt wird, zu einem das Mischelement nach oben durchströmenden Mischstrahl ($M_{12}$) vermischt wird; und in Schritt c) tritt der nach oben gerichtete Mischstrahl ($M_{12}$) durch eine Auslassöffnung des Mischelements aus, so dass durch die dergestalt verbesserte Konvektionsströmung im Tank die Hefezellen länger in Schwebe bleiben. Hierdurch wird eine schonendere Hefebehandlung gewährleistet und es können Pumpen mit geringerer Leistung verwendet werden.

Bevorzugt wird das Mischelement dergestalt im Tank ausgerichtet, das der Strahl bzw. der Mischstrahl ($M_{12}$) in Schritt c) im Wesentlichen vertikal austritt. Dadurch, dass der Mischstrahl zentral nach oben gerichtet wird und damit die gleiche Richtung aufweist wie die natürliche Blasensäule durch die $CO_2$-Entwicklung, wird auf effiziente Weise eine zusätzliche Unterstützung der natürlichen Konvektionsströmung im Tank erreicht.

In einer weiteren Variante des Verfahrens sind in der ersten und/oder der zweiten Zirkulationsleitung Messgeräte zur online/inline-Erfassung von Qualitätsparametern (wie z.B. Extrakt, Ethanol, pH-Wert, Trübung, Temperatur, Diacetyl etc.) angeordnet. Diese Maßnahme beruht auf der Überlegung, dass durch den erhöhten Volumenstrom in den beiden Zirkulationsleitungen der Tankinhalt während des Gärprozesses mehrmals umgewälzt wird. Idealerweise dauert eine vollständige Umwälzung des Tankinhalts zwischen 3 und 12 Stunden, noch bevorzugter zwischen 4 und 10 Stunden. Die dabei aufgezeichneten Messsignale können für eine optimierte Prozesssteuerung verwendet werden.

In einer weiteren Variante des Verfahrens wird der Strahl bzw. der Mischstrahl ($M_{12}$) vor dem Austreten in Schritt c) durch eine Querschnittsverengung des Mischelements beschleunigt. Hierdurch kann die natürliche Konvektionsströmung im Tank noch weiter unterstützt werden.

In einer weiteren Variante des Verfahrens ist der durch die Einlassöffnungen des Mischelements eingesaugte Volumenstrom ($M_2$) jedenfalls größer als der durch die Zirkulationspumpe geförderte Volumenstrom ($M_1$). Das verwendete Mischelement wird regelmäßig so ausgelegt, dass etwa ¾ des Volumenstroms ($M_{12}$) direkt aus dem Tank in das Mischelement eingesaugt werden (Volumenstrom $M_2$) und nur etwa ¼ des Volumenstroms ($M_{12}$) über die Zirkulationspumpe gefördert wird (Volumenstrom $M_1$). Auf diese Weise kann die mechanische Belastung der Hefe (etwa durch die in den Zirkulationsleitungen oder der Pumpe auftretenden Scherkräfte) signifikant reduziert werden. Es kann somit, auch aufgrund der niedrigen Druckverluste an dem Mischelement, eine relativ kleine Pumpe verwendet werden, welche wenig Energie benötigt.

Vorzugsweise ist des Weiteren das Mischelement als Venturi-Düse oder als Jet- bzw. Strahlpumpe ausgebildet. Der Unterschied zwischen diesen beiden Varianten liegt vor allem darin, dass bei der Jet- bzw. Strahlpumpe das direkt angesaugte Medium regelmäßig stromaufwärts von der Querschnittsverengung in das Mischelement eintritt und bei der Venturi-Düse im Bereich der Querschnittsverengung. Tendenziell ist aufgrund der etwas besseren Vermischungsbedingungen die Jet- bzw. Strahlpumpe zu bevorzugen. Die Auswahl hängt allerdings vom konkreten Einzelfall ab.

In einer weiteren Variante des Verfahrens erfolgt das Ansaugen des Gärmediums in Schritt a) vom tiefsten Punkt des Tankkonus. Diese Vorgehensweise bietet den Vorteil, dass hier eine besonders hohe Dichte an Hefezellen vorhanden ist, welche wieder in Schwebe gebracht werden können. Mit dem Begriff Gärmedium wird vorliegend die Mischung aus Hefezellen und Gärsubstrat (Bierwürze) im Gärtank bezeichnet.

In einer noch weiteren Variante des Verfahrens erfolgt das Ansaugen des Gärmediums in Schritt a) von einem beliebigen Punkt im Tankkonus. Die in der Brauindustrie eingesetzten Hefen reagieren in der Regel negativ auf Scherbeanspruchung während des Gärprozesses. Um die Scherbeanspruchung durch die Umwälzung zu reduzieren, kann daher auch ein Anstich im Tankkonus (vorzugsweise bodennah, damit nur ein geringer bzw. kein Sumpf zurückbleibt) vorgesehen sein. Hier wird dann ggf. Gärmedium mit einer etwas niedrigeren Hefekonzentration abgezogen und umgewälzt.

In einer Variante der Vorrichtung weist die Strahlpumpe eine Treibdüse auf, die mit der zweiten Zirkulationsleitung verbunden ist, eine Mischkammer stromabwärts der Treibdüse, mit mindestens einer Ansaugöffnung, um Medium aus dem Tank anzusaugen und mit dem durch die Treibdüse strömenden Treibmedium zu vermischen und einen Diffusor stromaufwärts der Mischkammer, der eine Auslassöffnung zum Abgeben der vermischten Medien in den Tank aufweist. Das durch die Treibdüse strömende aus dem Tankinhalt entnommene Treibmedium erzeugt im Diffusor eine schnellfließende Strömung, welche in der Mischkammer einen Unterdruck erzeugt. Durch diesen Unterdruck wird durch mindestens eine Ansaugöffnung Flüssigkeit aus dem Tank in die Mischkammer hineingezogen, in der Mischkammer und in dem nachfolgenden Diffusor mit dem Treibmedium vermischt und durch eine Auslassöffnung am Ende des Diffusors wieder in den Tank abgegeben. Im Gegensatz zu einer gewöhnlichen im Tank angeordneten Düse erfolgt hier eine Ansaugung von Medium (Flüssigkeit) aus dem Tank in die Strahlpumpe hinein, wobei in der Mischkammer dann eine Zwangsvermischung dieses angesaugten Mediums mit dem Treibmedium erfolgt. Die Vermischung ist daher wesentlich intensiver als dies bei einer bloßen Erzeugung einer Strömung im Tank gegeben wäre.

In einer weiteren Variante der Vorrichtung weist die Vorrichtung ein oder mehrere Ventile auf, die an die erste Zirkulationsleitung angeschlossen sind. Durch diese Ventile ist es möglich, einen hydraulischen Anschluss des Tanks an Rohrleitungen vorzunehmen. Über diese Ventile kann der Tank befüllt, entleert oder gereinigt werden. Weiterhin ist es möglich, unterschiedliche Flüssigkeiten zuzuführen, welche dann von der Vorrichtung im Tank miteinander vermischt werden.

In einer weiteren Variante der Vorrichtung weisen die Ventile Ventilgehäuse auf, die unmittelbar an der Wandung der ersten Zirkulationsleitung angeschlossen sind. Durch diese Anordnung der Ventilgehäuse werden Toträume im Bereich der Ventile vermieden. Im Bereich der Ventile können sich daher keine Flüssigkeiten sammeln, welche nicht mehr am Stoffaustausch teilnehmen. Damit wird die mikrobiologische Qualität der Vorrichtung verbessert.

In einer anderen Variante der Vorrichtung sind die Ventile vermischungssichere Ventile, besonders bevorzugt Doppelsitzventile. Vermischungssichere Ventile und insbesondere Doppelsitzventile verhindern zuverlässig, auch bei einer Leckage eines Ventilsitzes, dass sich Flüssigkeiten innerhalb der Vorrichtung mit Flüssigkeiten, die an den Ventilen anstehen, unerwünscht vermischen. Bei Doppelsitzventilen kann eine nicht ganz auszuschließende Leckage an die Umgebung abfließen.

In einer wiederum anderen Variante der Vorrichtung sind mindestens zwei der Ventile gegenüberliegend an der ersten Zirkulationsleitung angeschlossen. Durch gegenüberliegend angeschlossene Ventile ergibt sich eine besonders platzsparende Anordnung, sodass eine große Anzahl an Ventilen an die erste Zirkulationsleitung angeschlossen werden können.

In einer weiteren bevorzugten Variante der Vorrichtung sind die Ventile an im Wesentlichen horizontal verlegte Leitung angeschlossen. Wird die Vorrichtung und damit der daran angeschlossene Tank über Ventile an im Wesentlichen horizontal verlegte Rohrleitungen angeschlossen, kann damit ein Tanklagersystem aufgebaut werden, bei dem die Rohrleitungen durchgehend an allen Tanks entlang geführt werden und mit dem erfindungsgemäßen Vorrichtungen verbunden werden. Somit ergibt sich eine übersichtliche, platzsparende und hinsichtlich der Reinigung optimale Matrixstruktur mit der alle gewünschten Verschaltungsmöglichkeiten zwischen den Tanks bzw. alle gewünschten Befüll- und Entleermöglichkeiten bereitgestellt werden. Früher oft notwendige zentrale Ventilfelder, Verteilerpaneele oder Rohrbogenverteiler sind damit nicht mehr notwendig.

In einer noch weiteren bevorzugten Variante der Vorrichtung weist die erste Zirkulationsleitung drei U-förmig angeordnete gerade Schenkel auf, die über Bögen miteinander verbunden sind.

In einer anderen bevorzugten Variante der Vorrichtung sind gegenüberliegende Paare von Ventile an einem vertikal angeordneten Schenkel der ersten Zirkulationsleitung und/oder an einem horizontalen Schenkel angeordnet. Je nach den örtlichen Gegebenheiten können die Anschlüsse der Rohrleitungen über Ventile an beliebigen Stellen an den Zirkulationsleitungen, insbesondere der ersten Zirkulationsleitung erfolgen.

In einer weiteren bevorzugten Variante der Vorrichtung weist die zweite Zirkulationsleitung einen Bereich auf, der sich in dem unteren Bereich eines Tanks hinein erstreckt. Damit kann die Strahlpumpe, die gleichzeitig als Auslass und als Vermischungseinrichtung dient, auf einer gewünschten Höhe innerhalb eines Tanks angeordnet werden.

In einer weiteren bevorzugten Variante der Vorrichtung weist der sich in den Tank hinein erstreckende Bereich der zweiten Zirkulationsleitung eine Länge von 350 mm - 1800 mm, bevorzugt 375 mm - 1650 mm und noch bevorzugter von 400 mm - 1500 mm auf. Damit wird die Strahlpumpe bevorzugt in der unteren Hälfte des Tanks, insbesondere im unteren Drittel des Tanks angeordnet.

In einer noch weiteren bevorzugten Variante der Vorrichtung ist der Einlass als Hohlkörper ausgebildet, durch den sich die zweite Zirkulationsleitung hindurch und in den Tank hinein erstreckt. Dementsprechend gibt es nur einen Anschluss der Vorrichtung an den Tank, nämlich am untersten Ende des Tanks. Das Medium wird durch den Hohlkörper am untersten Ende des Tanks abgesaugt und mittels der Pumpe durch die zweite Zirkulationsleitung und durch den Hohlkörper hindurch in den Tank hinein gefördert. Dort erreicht es die erfindungsgemäße Strahlpumpe, welche die Vermischung des gepumpten Mediums mit einem Medium aus dem Tank bewirkt.

Bezugszeichenliste:

| | |
|---|---|
| 1 | Vorrichtung zur Vermischung eines Tankinhalts |
| 2 | Tank |
| 2a | Tankkonus |
| 3 | Konusmannloch |
| 4 | (unterer) Anschlussflansch |
| 4a | oberer Flansch |
| 10 | Mischelement |

| | |
|---|---|
| 11 | Eintrittsöffnung |
| 12 | Treibkopf /Treibdüse |
| 13 | Innengewinde |
| 14 | Mischkammer |
| 16 | Diffusor |
| 18 | Auslassöffnung |
| 19 | Ansaugöffnung(en)/Einlassöffnung(en) |
| 20 | Einlass |
| 22 | Klappenventil |
| 24 | Klappenventil |
| 26 | Klappenventil |
| 30 | Zirkulationspumpe |
| 40 | erste Zirkulationsleitung |
| 41 | Fortsetzung der ersten Zirkulationsleitung |
| 42 | horizontal angeordneter Schenkel |
| 43 | Bogen |
| 44 | vertikal angeordneter Schenkel |
| 45 | Bogen |
| 46 | horizontal angeordneter Schenkel |
| 50 | zweite Zirkulationsleitung |
| 52 | in den Tank hineinragender Abschnitt der zweiten Zirkulationsleitung |
| 53 | U-förmiger Bereich der zweiten Zirkulationsleitung |
| 54 | Ventile oder Messeinrichtungen |
| 62, 63, 64, 65 | Paare von Ventilen |
| 70 | Rohrleitungen |
| $M_1$ | von der Pumpe angesaugtes bzw. gepumptes Gär-/Treibmedium |
| $M_2$ | direkt in das Mischelement eingesaugtes Gärmedium |
| $M_{12}$ | Mischstrahl |

**Patentansprüche**

1. Verfahren zur beschleunigten Gärung in einem Gärtank (2) mit zumindest einem Tankkonus (2a) und einem Anschlussflansch (4), insbesondere bei der Bierherstellung, mit den Schritten:

 a) Ansaugen von Gärmedium ($M_1$) aus dem Tank (2) über eine erste Zirkulationsleitung (40) mittels einer Zirkulationspumpe (30);
 b) Einleiten des von der Zirkulationspumpe (30) über eine zweite Zirkulationsleitung (50) nunmehr gepumpten Treibmediums ($M_1$) in ein Mischelement (10) welches in einer Höhe (L) von 350 mm - 1800 mm, gemessen von der Unterkante des Anschlussflanschs (4) bis zur Unterkante des Mischelements (10), im Tankkonus (2a) eingebaut ist; und
 c) Erzeugen eines nach oben gerichteten Strahls, welcher durch eine Auslassöffnung (18) des Mischelements (10) austritt, so dass durch die dergestalt verbesserte Konvektionsströmung im Tank (2) die Hefezellen länger in Schwebe bleiben.

2. Verfahren gemäß Anspruch 1, **dadurch gekennzeichnet, dass** das Mischelement (10) in einer Höhe (L) von 375 mm - 1650 mm, bevorzugt von 400 mm - 1500 mm, gemessen von der Unterkante des Anschlussflanschs (4) bis zur Unterkante des Mischelements (10) im Tankkonus (2a) eingebaut ist.

3. Verfahren gemäß einem der Ansprüche 1 oder 2, **dadurch gekennzeichnet, dass** die Umwälzzeit 3 h - 12 h, bevorzugt 4 h - 10 h pro Umwälzung beträgt.

4. Verfahren gemäß einem der vorhergehenden Ansprüche, **dadurch gekennzeichnet, dass** der Treibvolumenstrom ($M_1$) 6 m³/h - 50 m³/h, bevorzugt 8 m³/h - 41 m³/h, beträgt.

5. Verfahren gemäß einem der vorhergehenden Ansprüche, **dadurch gekennzeichnet, dass** als Mischelement (10) ein vollverschweißtes Modul verwendet wird, welches aus zwei zerspanten Teilen zusammengesetzt wird, wobei durch die verschweißte Bauart eine hygienische Ausführung der Düse entsteht.

**6.** Verfahren gemäß einem der vorhergehenden Ansprüche, **dadurch gekennzeichnet, dass** in Schritt b) das von der Zirkulationspumpe (30) über eine zweite Zirkulationsleitung (50) nunmehr gepumpte Treibmedium ($M_1$) mittels eines Treibkopfs (12) in das Mischelement (10) eingespritzt wird, wobei das Treibmedium ($M_1$) mit weiterem Gärmedium ($M_2$), welches vermittels des durch das Einspritzen des Treibmediums ($M_1$) erzeugten Unterdrucks über eine oder mehrere Einlassöffnungen (19) des Mischelements (10) direkt in das Mischelement (10) eingesaugt wird, zu einem das Mischelement (10) nach oben durchströmenden Mischstrahl ($M_{12}$) vermischt wird; und

dass in Schritt c) der nach oben gerichtete Mischstrahl ($M_{12}$) durch eine Auslassöffnung (18) des Mischelements (10) austritt, so dass durch die dergestalt verbesserte Konvektionsströmung im Tank (2) die Hefezellen länger in Schwebe bleiben.

**7.** Verfahren gemäß einem der vorhergehenden Ansprüche, **dadurch gekennzeichnet, dass** das Mischelement (10) dergestalt im Tank (2) ausgerichtet ist, das der Strahl bzw. der Mischstrahl ($M_{12}$) in Schritt c) vertikal austritt.

**8.** Verfahren gemäß einem der vorhergehenden Ansprüche, **dadurch gekennzeichnet, dass** das Mischelement (10) als Strahlpumpe ausgebildet ist.

**9.** Vorrichtung (1) zur Vermischung eines Inhalts eines Tanks (2) mit zumindest einem Tankkonus (2a) und einem Anschlussflansch (4), aufweisend:

    a. ein im Tankkonus (2a) anordenbares Mischelement (10),
    b. einen am Anschlussflansch (4) anordenbaren Einlass (20),
    c. eine Zirkulationspumpe (30),
    d. eine erste Zirkulationsleitung (40), die den Einlass (20) mit der Zirkulationspumpe (30) verbindet, und
    e. eine zweite Zirkulationsleitung (50), die die Zirkulationspumpe (30) mit dem Mischelement (10) verbindet, **dadurch gekennzeichnet, dass**
    f. das Mischelement (10) in einer Höhe (L) von 350 mm - 1800 mm, gemessen von der Unterkante des Anschlussflanschs (4) bis zur Unterkante des Mischelements (10) im Tankkonus (2a) eingebaut ist.

**10.** Vorrichtung gemäß Anspruch 9, **dadurch gekennzeichnet, dass** das Mischelement (10) in einer Höhe (L) von 375 mm - 1650 mm, bevorzugt von 400 mm - 1500 mm, gemessen von der Unterkante des Anschlussflansches (4) bis zur Unterkante des Mischelements (10), im Tankkonus (2a) eingebaut ist.

**11.** Vorrichtung gemäß Anspruch 9 oder 10, wobei das Mischelement (10) aufweist:

    a. einen Treibkopf (12), der mit der zweiten Zirkulationsleitung (50) verbunden ist;
    b. eine Mischkammer (14), die den Treibkopf (12) umgibt, mit mindestens einer Einlassöffnung (19), um Medium aus dem Tank (2) anzusaugen und mit dem durch den Treibkopf (12) strömenden Treibmedium zu vermischen; und
    c. einen Diffusor (16) stromabwärts der Mischkammer (14), der eine Auslassöffnung (18) zum Abgeben der vermischten Medien in den Tank (2) aufweist.

**12.** Vorrichtung gemäß einem der Ansprüche 9 bis 11, aufweisend ein oder mehrere Ventile (62, 63, 64, 65), die an die erste Zirkulationsleitung (40) angeschlossen sind.

**13.** Vorrichtung gemäß einem der Ansprüche 9 bis 12, wobei das Mischelement (10) ein vollverschweißtes Modul ist, welches aus zwei zerspanten Teilen zusammengesetzt wird, wobei durch die verschweißte Bauart eine hygienische Ausführung der Düse entsteht.

**14.** Vorrichtung gemäß einem der Ansprüche 9 bis 13, wobei das Mischelement (10) als Strahlpumpe ausgebildet ist.

**15.** Vorrichtung gemäß Anspruch einem der Ansprüche 9 bis 14, wobei der Einlass (20) als Hohlkörper ausgebildet ist, durch den sich die zweite Zirkulationsleitung (50) hindurch und in den Tank (2) hinein erstreckt.

**Claims**

**1.** Method for an accelerated fermentation in a fermentation tank (2) with at least a tank cone (2a) and a connection flange (4), in particular for beer production, comprising the steps:

a) sucking in of fermentation fluid (M1) from the tank (2) via a first circulation pipe (40) by means of a circulation pump (30);

b) inducing the drive fluid (M1) that is now pumped by the circulation pump (30) via a second circulation pipe (50) into a mixing member (10) that is arranged within the tank cone (2a) at a height (L) of 350 mm - 1.800 mm between the bottom edge of the connection flange (4) and the bottom edge of the mixing member (10); and

c) generating of a jet that is directed upwards and exiting through an outlet opening (18) of the mixing member (10), so that the yeast cells stay in suspension for a longer time by means of a convective current, which is improved in that manner, in the tank (2).

2. Method according to claim 1, **characterized in that** the mixing member (10) is arranged within the tank cone (2a) at a height (L) of 375 mm - 1.650 mm, preferably of 400 mm - 1.500 mm, between the bottom edge of the connection flange (4) and the bottom edge of the mixing member (10).

3. Method according to one of the claims 1 or 2, **characterized in that** the circulation time is 3 h - 12 h, preferably 4 h - 10 h per circulation.

4. Method according to one of the preceding claims, **characterized in that** the the drive volume flow of the drive fluid $(M_1)$ is 6 m$^3$/h - 50 m$^3$/h, preferably 8 m$^3$/h - 41 m$^3$/h.

5. Method according to one of the preceding claims, **characterized in that** a completely welded module that is assembled from two parts, which are shaped by chip removal, is used as mixing member (10), wherein due to the welded construction type a hygienic embodiment of the injector is generated.

6. Method according to one of the preceding claims, **characterized in that**:

in step b), the drive fluid $(M_1)$ that is now pumped by the circulation pump (30) via a second circulation pipe (50) is injected by means of a drive head (12) into the mixing member (10), wherein the drive fluid $(M_1)$ is mixed with further fermentation fluid $(M_2)$ that is sucked in through one or more inlet openings (19) of the mixing member (10) directly into the mixing member (10) by an underpressure that is generated by the injection of the drive fluid $(M_1)$, to a mixed jet $(M_{12})$ flowing upwards through the mixing member (10); and **in that**

in step c), the mixed jet $(M_{12})$, which is directed upwards, exits through an outlet opening (18) of the mixing member (10) so that the yeast cells stay in suspension in the tank (2) for a longer time by the convective current, which is improved **in that** manner.

7. Method according to one of the preceding claims, **characterized in that** the mixing member (10) is arranged in the tank (2) in such a manner that the jet and respectively the mixed jet $(M_{12})$ in step c) leaves essentially vertically.

8. Method according to one of the preceding claims, **characterized in that** the mixing member (10) is a jet pump.

9. Device (1) for mixing a content of a tank (2) with at least a tank cone (2a) and a connection flange (4), comprising:

a. a mixing member (10) that can be arranged in the tank cone (2a);
b. an inlet (20) that can be arranged at the connection flange (4);
c. a circulation pump (30);
d. a first circulation pipe (40) connecting the inlet (20) with the circulation pump (30); and
e. a second circulation pipe (50) connecting the circulation pump (30) with the mixing member (10),
**characterized in that**
f. the mixing member (10) is arranged within the tank cone (2a) at a height (L) of 350 mm - 1.800 mm between the bottom edge of the connection flange (4) and the bottom edge of the mixing member (10).

10. Device according to claim 9, **characterized in that** the mixing member (10) is arranged within the tank cone (2a) at a height (L) of 375 mm - 1.650 mm, preferably of 400 mm - 1.500 mm, between the bottom edge of the connection flange (4) and the bottom edge of the mixing member (10).

11. Device according to one of the claims 9 or 10, wherein the mixing member (10) comprises:

a. a drive head (12) that is connected to the second circulation pipe (50);

b. a mixing chamber (14) surrounding the drive head (12) with at least one inlet opening (19) in order to suck in fluid from the tank (2) and to mix it with the drive fluid flowing through the drive head (12); and

c. a diffuser (16) that is arranged downstream the mixing chamber (14) comprising an outlet opening (18) for dispensing the mixed fluids into the tank (2).

12. Device according to one of the claims 9 to 11, further comprising one or more valves (62, 63, 64, 65) that are connected to the first circulation pipe (40).

13. Device according to one of the claims 9 to 12, wherein the mixing member (10) is a completely welded module that is assembled from two parts, which are shaped by chip removal, wherein due to the welded construction type a hygienic embodiment of the injector is generated.

14. Device according to one of the claims 9 to 13, wherein the mixing member (10) is a jet pump.

15. Device according to one of the claims 9 to 14, wherein the inlet (20) is a hollow part, through which the second circulation pipe (50) extends inside the tank (2).

**Revendications**

1. Procédé pour accélérer la fermentation dans une cuve de fermentation (2) présentant au moins un cône de cuve (2a) et une bride de raccordement (4), en particulier pour la fabrication de bière, comprenant les étapes suivantes :

   a) aspiration, au moyen d'une pompe de circulation (30), d'un milieu de fermentation ($M_1$) de la cuve (2) à travers une première conduite de circulation (40),

   b) envoi du milieu propulseur ($M_1$), pompé à présent par la pompe de circulation (30) à travers une deuxième conduite de circulation (50), dans un élément mélangeur (10) qui est monté dans le cône de cuve (2a) à une hauteur (L) de 350 mm à 1 800 mm, mesurée du bord inférieur de la bride de raccordement (4) au bord inférieur de l'élément mélangeur (10) ; et

   c) production d'un jet dirigé vers le haut, lequel sort par une ouverture de sortie (18) de l'élément mélangeur (10), de sorte que le courant de convection ainsi amélioré dans la cuve (2) permet aux cellules de levure de rester plus longtemps en suspension.

2. Procédé selon la revendication 1, **caractérisé en ce que** l'élément mélangeur (10) est monté dans le cône de cuve (2a) à une hauteur (L) de 375 mm à 1650 mm, de préférence de 400 mm à 1500 mm, mesurée du bord inférieur de la bride de raccordement (4) au bord inférieur de l'élément mélangeur (10).

3. Procédé selon l'une des revendications 1 ou 2, **caractérisé en ce que** le temps de brassage est de 3 h à 12 h, de préférence de 4 h à 10 h par brassage.

4. Procédé selon l'une des revendications précédentes, **caractérisé en ce que** le débit volume de propulsion ($M_1$) est de 6 m$^3$/h à 50 m$^3$/h, de préférence de 8 m$^3$/h à 41 m$^3$/h.

5. Procédé selon l'une des revendications précédentes, **caractérisé en ce que** l'on utilise comme élément mélangeur (10) un module entièrement soudé qui se compose de deux pièces usinées, la construction soudée conférant à la buse une conception hygiénique.

6. Procédé selon l'une des revendications précédentes, **caractérisé en ce que**, à l'étape b), le milieu propulseur ($M_1$) pompé à présent par la pompe de circulation (30) à travers une deuxième conduite de circulation (50) est injecté dans l'élément mélangeur (10) au moyen d'une tête propulsive (12), le milieu propulseur ($M_1$) étant mélangé avec du milieu de fermentation supplémentaire ($M_2$), lequel est aspiré directement dans l'élément mélangeur (10) au moyen de la dépression produite par l'injection du milieu propulseur ($M_1$) à travers une ou plusieurs ouvertures d'entrée (19) de l'élément mélangeur (10), pour former un jet de mélange ($M_{12}$) qui traverse l'élément mélangeur (10) vers le haut ; et **en ce que**, à l'étape c), le jet de mélange ($M_{12}$) dirigé vers le haut sort par une ouverture de sortie (18) de l'élément mélangeur (10), de sorte que le courant de convection ainsi amélioré dans la cuve (2) permet aux cellules de levure de rester plus longtemps en suspension.

**7.** Procédé selon l'une des revendications précédentes, **caractérisé en ce que** l'élément mélangeur (10) est orienté dans la cuve (2) de façon que le jet, à savoir le jet de mélange ($M_{12}$), sorte verticalement à l'étape c).

**8.** Procédé selon l'une des revendications précédentes, **caractérisé en ce que** l'élément mélangeur (10) est réalisé sous la forme d'une pompe à jet.

**9.** Dispositif (1) pour mélanger un contenu d'une cuve (2) présentant au moins un cône de cuve (2a) et une bride de raccordement (4), comportant :

    a. un élément mélangeur (10) pouvant être disposé dans le cône de cuve (2a),
    b. une entrée (20) pouvant être disposée sur la bride de raccordement (4),
    c. une pompe de circulation (30),
    d. une première conduite de circulation (40) qui relie l'entrée (20) à la pompe de circulation (30), et
    e. une deuxième conduite de circulation (50) qui relie la pompe de circulation (30) à l'élément mélangeur (10),
    **caractérisé en ce que**
    f. l'élément mélangeur (10) est monté dans le cône de cuve (2a) à une hauteur (L) de 350 mm à 1800 mm, mesurée du bord inférieur de la bride de raccordement (4) au bord inférieur de l'élément mélangeur (10).

**10.** Procédé selon la revendication 9, **caractérisé en ce que** l'élément mélangeur (10) est monté dans le cône de cuve (2a) à une hauteur (L) de 375 mm à 1650 mm, de préférence de 400 mm à 1500 mm, mesurée du bord inférieur de la bride de raccordement (4) au bord inférieur de l'élément mélangeur (10).

**11.** Dispositif selon la revendication 9 ou 10, dans lequel l'élément mélangeur (10) comporte :

    a. une tête propulsive (12) qui est reliée à la deuxième conduite de circulation (50) ;
    b. une chambre de mélange (14) qui entoure la tête propulsive (12) et présente au moins une ouverture d'entrée (19) pour aspirer un milieu de la cuve (2) et le mélanger avec le milieu propulseur s'écoulant à travers la tête propulsive (12) ; et
    c. un diffuseur (16) en aval de la chambre de mélange (14), qui est pourvu d'une ouverture de sortie (18) pour faire passer les milieux mélangés dans la cuve (2).

**12.** Dispositif selon l'une des revendications 9 à 11, comportant une ou plusieurs vannes (62, 63, 64, 65) qui sont raccordées à la première conduite de circulation (40).

**13.** Dispositif selon l'une des revendications 9 à 12, dans lequel l'élément mélangeur (10) est un module entièrement soudé qui se compose de deux pièces usinées, la construction soudée conférant à la buse une conception hygiénique.

**14.** Dispositif selon l'une des revendications 9 à 13, dans lequel l'élément mélangeur (10) est réalisé sous la forme d'une pompe à jet.

**15.** Dispositif selon l'une des revendications 9 à 14, dans lequel l'entrée (20) est réalisée sous la forme d'un corps creux à travers lequel la deuxième conduite de circulation (50) s'étend et pénètre à l'intérieur de la cuve (2).

**Fig. 1**

**Fig. 2**

**Fig. 3**

**Fig. 4**

**IN DER BESCHREIBUNG AUFGEFÜHRTE DOKUMENTE**

**In der Beschreibung aufgeführte Patentdokumente**

- US 3814003 A
- EP 1324818 B1
- DE 19740319 A1
- DE 19807558 A1
- WO 9845401 A